# EUROPEAN PATENT SPECIFICATION

(11) **EP 2 981 714 B1**
(45) Date of publication and mention of the grant of the patent: **01.04.2020**
(21) Application number: 14705087.6
(22) Date of filing: 07.02.2014
(51) Int. Cl.: F03D 80/60, H02K 7/18, F04D 29/60

(54) **VENTILATION DEVICE AND VENTILATION SYSTEM FOR A WIND TURBINE**
BELÜFTUNGSVORRICHTUNG UND BELÜFTUNGSSYSTEM FÜR EINE WINDTURBINE
DISPOSITIF DE VENTILATION ET SYSTÈME DE VENTILATION POUR UNE ÉOLIENNE

(30) Priority: 22.05.2013 EP 13168761
(43) Date of publication of application: 10.02.2016
(73) Proprietor: Siemens Gamesa Renewable Energy A/S, 7330 Brande (DK)
(72) Inventor: ERIKSEN, Uffe, DK-8700 Horsens (DK); MICHAELSEN, Claus, DK-7400 Herning (DK); MUNK-HANSEN, Thorkil, DK-7323 Give (DK); THYGESEN, Claus, DK-8670 Låsby (DK)
(74) Representative: Aspacher, Karl-Georg
(86) International application number: PCT/EP2014/052468
(87) International publication number: WO 2014/187577

(56) References cited:
- EP-A1- 2 466 128
- CN-U- 202 096 855
- DE-A1-102004 014 876
- US-A1- 2010 118 492
- US-A1- 2011 001 371

## Description

### Field of invention

The present invention relates to the field of wind turbines.

### Art Background

The rotor of a direct drive generator for wind turbines has a diameter of more than 4m, dependent on the generator power and torque. The generator rotor of the Siemens Wind Power direct drive turbines for example has an outer diameter of 4.2m for the SWP 3.0-101 and an outer diameter of 6.5m for the SWP 6.0-154 and a length of around 2.5m.

The rotor consists of a front plate and a rotor ring with a certain yoke height. The complete rotor is also called rotor housing because in the Siemens Wind Power direct drive turbines the rotor is located outside of the stator and acts therefore like a house. The rotor outer surface is directly in contact with the ambient air.

When having a large direct drive wind turbine, in general a number of fans are used for cooling the large generator. Such ventilation takes up a lot of space in a nacelle for the generator, thus making the nacelle larger. Moreover, if filters are used to remove particles from the air in order to protect the generator, the air filters need to be changed at least during certain service intervals, to ensure a proper functionality of these air filters.

WO2012059591 discloses a wind turbine comprising a nacelle, a yawing mechanism, a rotor hub, and a mounting attachment arranged to be fixed to a bedframe of the nacelle, where a fan blows air into the internal space in the mounting attachment for cooling the interior. The insert is configured in such way that the internal space in the mounting attachment is closed so that air can be blown into the internal space only by means of the fan. Two air openings have droplet separators so that air can flow into the nacelle through those openings and any moisture in the form of droplets is removed.

This solution would not be suitable for larger wind turbine as there is an increasing need for cooling of the generator and service of the ventilation device and its components are more extensive for existing wind turbines.

CN202096855U and EP2466128A1 are two further examples of ventilation systems for wind turbines.

Hence, there is a need to improve the ventilation of a wind turbine in an easier and more cost reducing manner.

### Summary of the Invention

This need may be met by the subject matter according to the independent claim 1. Advantageous embodiments of the present invention are described by the dependent claims.

Therefore, according to a first aspect of the invention there is provided a ventilation device for a wind turbine, preferably for a nacelle of a wind turbine, more preferable for a cooling system for a nacelle of a wind turbine, the ventilation device comprising: An inlet ventilation unit, a casing unit, and a filter unit. The casing unit is adapted to receive the inlet ventilation unit and the filter unit. The inlet ventilation unit is adapted to generate an airstream from an inlet side of the casing unit to an outlet side of the casing unit, when in use, thus forming an airstream path in the ventilation device. The filter unit is arranged in the airstream path when inserted. And the ventilation device is adapted to be attached at a nacelle.

The canopy, a machine structure such as a bedframe, and a yawing mechanism may be referred to collectively as a 'nacelle' in the following. The term 'canopy' generally refers to a shell or housing that protects the components enclosed by it from the surroundings. In the context of the invention, the canopy and nacelle may be regarded as equivalent in terms of function.

Ambient air can comprise dust, insects, pollen, and other airborne particles. Such impurities in the air could be problematic in the wind turbine interior and therefore should be filtered.

The filter unit is arranged after the inlet ventilation device. For example the ventilation device may be constructed to use an air inlet fan, with one or more filters realised to filter airborne particles from the air.

The ventilation device which is attachable to the nacelle of a wind turbine may be attached to an inlet side of the nacelle. The inlet side of the nacelle may be a part of the nacelle, where the air for cooling the generator is entering the nacelle.

In this way, the ventilation device will draw essentially only filtered air into the nacelle interior.

A filter unit according to the invention may for example be a single filter. It may also comprise a couple of filters for example used for different filtering purposes.

An inlet ventilation unit according to the invention may for example be a single ventilator. It may also comprise a couple of smaller ventilator, acting together like one stronger and bigger ventilator. A ventilator may for example be a blower, exhauster, fan or the like.

The inlet side of a nacelle may be for example a lower region of the nacelle, preferably at the machine structure of the nacelle of a wind turbine.

The advantage of this concept is that the ventilation and the filters may be placed at a non-used place and space inside the nacelle below the floor.

This aspect of the invention is based on the idea that by using a non-used space inside the canopy or nacelle, the size of the nacelle of the generator may be reduced and moreover, that by placing the ventilation device outside the nacelle, service of the ventilators and filters may be simplified and thus reducing service costs.

According to a further embodiment of the invention the ventilation device moreover comprises a separation means, wherein the separation means is adapted to remove mist and/or airborne particles from an incoming air.

The separation means according to the invention may be any means able to remove unwanted mist and/or particles from the incoming air.

According to a further preferred embodiment of the invention, the filter unit may comprise a salt filter realised for removing airborne salt particles from the incoming air.

This embodiment of the invention is based on the idea that by providing a salt filter, even wind turbines used at a seaside or nearby a seaside may be equipped with a ventilation device according to the invention.

According to the invention the ventilation device is adapted to be repeatedly attached and detached to the nacelle.

The ventilation device may be adapted to be repeatedly attached and detached to a specific part of the nacelle, like for example a bottom part of the nacelle. Any part of the nacelle, which may be suitable for letting cooling air into the nacelle for cooling at least the generator, and therefore act as an inlet for the nacelle, may act as such a specific part of the nacelle, where the ventilation device may be repeatedly attachable and detachable.

This embodiment of the invention is based on the idea that by providing a ventilation device, which is repeatedly attachable and detachable to the nacelle, service of the ventilation device and its components may be even more simplified.

According to the invention the ventilation device moreover comprises an outer mist eliminator unit, wherein the outer mist eliminator unit is arranged at the inlet side of the casing unit inside the casing unit, at the inlet side of the casing unit outside the casing unit or outside the casing unit.

The outer mist eliminator according to the invention may be a part of the separation means. The outer mist eliminator removes mist from the ambient air, before the air enters the ventilation device.

This embodiment of the invention is based on the idea that by providing an outer mist eliminator to the ventilation device, another filter stage is provided, which may be more suitable for filtering moisture/humidity of the air. This may extend the operating mode of the filter or filters, before service is needed.

A mist eliminator unit can be realized as a separator with an arrangement of angled vanes that deflect the air being drawn in, and thereby cause any moisture to condense and collect on the angled vanes. The condensed water vapour can be collected and expelled through some appropriate outlet. Some separator designs include 'hooks' arranged against the intake direction to trap the airborne moisture droplets. The separator vanes may be made of plastic, aluminium, a carbon fibre reinforced polymeric material, or other suitable material.

In very cold conditions, the collected moisture can freeze over these hooks, thus clogging the inlet passages of the mist eliminator. Therefore, in a further preferred embodiment of the invention, a ventilation device comprises a fan arranged to direct an airflow into or onto the separator so that ice build-up can be avoided. Alternatively or in addition, if the separator vanes are made of a conductive material such as carbon or aluminium, an electric current may be applied to the vanes in order to heat them and to melt any ice build-up.

According to a further embodiment of the invention, if the outer mist eliminator unit is arranged outside the casing unit, the casing unit moreover comprises an air channel arranged between the outer mist eliminator unit and the casing unit. Therein, the air channel is adapted for guiding air from the outer mist eliminator to the inlet side of the casing unit, in such a manner, that the inlet side of the casing unit only receives air from the air channel.

An air channel according to the invention may not be limited to a physical entity, like for example a duct. The distance between the inlet fan and mist eliminator is referred to as air channel. The air channel is formed when the inlet fan and mist eliminator is arranged with some distance in between each other. As the air channel serves as a guidance for the air flow and furthermore facilitates the air flow from the mist eliminator to the casing unit, any entity suitable as such a guidance, may act as the air channel. When the mist eliminator is arranged in the casing, the air channel is relative short. The length of the air channel is increasing when the mist eliminator is arranged outside the casing, for example at the canopy. The efficiency of a mist eliminator depends on the area that the inlet fan can utilize when sucking air into the interior of the nacelle.

This embodiment of the invention is based on the idea that by providing an outer mist eliminator for the ventilation device, it may be ensured, that moisture/humidity of the air is removed before the ambient air is blown by one or more ventilator units like fans or inflow fan through the filter or filters before entering the inside of the nacelle, even if the outer mist eliminator unit is not attached directly to the ventilation device. This may make it possible to further miniaturize the ventilation device.

According to a further embodiment of the invention the inlet ventilation unit comprises at least an inlet fan, and a control unit. Therein, the inlet fan is adapted for sucking and/or blowing air into the casing unit, and the control unit is adapted for enabling an individual control of each inlet fan.

This embodiment of the invention is based on the idea that by providing a control unit for individual controlling each fan of the ventilation unit, the amount of air provided to the nacelle for cooling the generator may be adapted to a variable cooling need of the generator. Moreover, if a fan is dropping out, the amount of air needed for supplying the generator in the nacelle may still be provided, by respectively attuning the remaining inlet fans of the ventilation unit.

According to a further embodiment of the invention the ventilation device moreover comprises a ventilation grating, wherein the ventilation grating is arranged at the inlet side or at the outlet side of the casing unit.

This embodiment of the invention is based on the idea that by providing a ventilation grating to the ventilation device, coarse-particles may be removed before entering the casing unit.

According to a further embodiment of the invention the ventilation device is made out of at least one material of a group of light-weight materials, the group of light-weight materials comprising: aluminum, carbon fibre, glass fibre, Kevlar, nylon, Teflon and plastic.

This embodiment of the invention is based on the idea that by using light-weight material for at least a part of the parts of the ventilation device, the weight of the nacelle may be reduced and the ventilation device may be exchanged in a simple way.

According to a further embodiment of the invention the ventilation device moreover comprises a further inlet ventilation unit, wherein the casing unit is adapted to receive the further inlet ventilation unit, and the further inlet ventilation unit is arranged in parallel to the inlet ventilation unit.

By providing a further inlet ventilation unit, a redundant ventilation device may be provided. Thus, if one inlet ventilation unit fails, the second inlet ventilation unit may still be in operation or begin to operate as a substitution for the failed inlet ventilation unit.

This embodiment of the invention is based on the idea that by providing a further inlet ventilation unit, the cooling of the generator may be improved further.

According to a further embodiment of the invention the ventilation device moreover comprises a further filter unit, wherein, when inserted in the casing unit, the filter unit is arranged in the airstream path casing unit.

This embodiment of the invention is based on the idea that by providing a further filter unit, the filtering of the ambient air may be improved and/or the further filter may be exchanged together with the further inlet ventilation unit, thus simplifying the service of the nacelle.

According to a further embodiment of the invention a nacelle grating is attachable at the ventilation device, wherein the nacelle grating is at least a part of the nacelle.

The nacelle grating according to the invention may be a specific part of the nacelle, like for example a bottom part of the nacelle. Any part of the nacelle, which may be suitable for letting cooling air into the nacelle for cooling at least the generator, and therefore act as an inlet for the nacelle, may comprise the nacelle grating.

This embodiment is based on the idea that by attaching the nacelle grating of the nacelle to the ventilation device, an easy-to-fit construction may be provided.

According to a second aspect of the invention there is provided a ventilation system for a wind turbine according to claim 11, preferably for a nacelle of a wind turbine, more preferable for a cooling system for a nacelle of a wind turbine. The ventilation system comprises a ventilation device according to any one of the embodiments of the first aspect of the invention, and a frame structure. Therein, the frame structure is adapted to receive the ventilation device. The frame structure is adapted to be attached at a nacelle.

A frame structure according to the invention may be a support structure used for receiving the ventilation device, for example like providing a slot for the ventilation device. Thus, the frame structure may be attached to the nacelle, and the ventilation device may be quickly exchangeable. The frame structure may differ in its design to provide different kind of frame structures for use in different kind of nacelles without the need of changing the design of the ventilation device. The frame structure may be adapted to be repeatedly attached and detached to a specific part of the nacelle, like for example a bottom part of the nacelle. Any part of the nacelle, which may be suitable for letting cooling air into the nacelle for cooling at least the generator, and therefore act as an inlet for the nacelle, may act as such a specific part of the nacelle, where the frame structure may be repeatedly attachable and detachable.

A top side of the frame structure and/or a top side of the ventilation device may be adapted to be attached at a bottom side of the nacelle. Preferably, the frame structure and/or the top side of the ventilation device may be adapted to be attached at an inlet side of the nacelle.

This aspect of the invention is based on the idea that by using a non-used space inside the canopy or nacelle, the size of the nacelle of the generator may be reduced and moreover, that by placing the ventilation system outside the nacelle, service of the ventilators and filters in the ventilation system may be simplified and thus reducing service costs.

According to a further embodiment of the invention the nacelle grating is at least a part of the nacelle.

This embodiment of the invention is based on the idea that by including the nacelle grating into the ventilation system, a further grating of the ventilation system may be disposed of. Moreover the nacelle grating may provide an advantageous point of connection of the ventilation system to the nacelle.

According to a further embodiment of the invention the ventilation system moreover comprises a further grating, wherein a bottom side of the frame structure and/or a bottom side of the ventilation device is adapted to be attached at a top side of the further grating.

This embodiment of the invention is based on the idea that by providing a further grating to the ventilation system, the whole ventilation system may be protected against an intrusion of coarse-particles.

According to a further embodiment of the invention the ventilation device is adapted to act as one exchangeable device.

This embodiment of the invention is based on the idea that by being able to exchange the ventilation device as a whole, service at the wind turbine may be simplified, thus reducing service costs.

According to a further embodiment of the invention the frame structure, the ventilation device and/or the further grating are together adapted to act as one exchangeable device.

This embodiment of the invention is based on the idea that by being able to exchange the ventilation system without the nacelle gratings as a whole, service at the wind turbine may be even more simplified, thus further reducing service costs.

It has to be noted that embodiments of the invention have been described with reference to different subject matters. In particular, some embodiments have been described with reference to method type claims whereas other embodiments have been described with reference to apparatus type claims. However, a person skilled in the art will gather from the above and the following description that, unless other notified, in addition to any combination of features belonging to one type of subject matter also any combination between features relating to different subject matters, in particular between features of the method type claims and features of the apparatus type claims is considered as to be disclosed with this document.

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.

### Brief Description of the Drawing

Figure 1 shows a schematically three dimensional drawing of a proposed ventilation device for a generator according to an exemplary embodiment of the invention.
Figure 2 shows a schematically three dimensional drawing of a proposed casing unit for a ventilation device as shown in figure 1 according to an exemplary embodiment of the invention.
Figure 3 shows a schematically three dimensional drawing of a proposed frame structure for a ventilation system comprising a ventilation device as shown in figure 1 according to an exemplary embodiment of the invention.
Figure 4 shows a schematically drawing of a first side view of a proposed ventilation system comprising a ventilation device comprising one ventilation unit according to an exemplary embodiment of the invention.
Figure 5 shows a schematically drawing of a first side view of a proposed ventilation system comprising a ventilation device comprising two inlet ventilation units as shown in figure 1 according to an exemplary embodiment of the invention.
Fig. 6 shows a schematically drawing of a proposed airflow control arrangement according to an exemplary embodiment of the invention.
Fig. 7 shows a schematically drawing of a nacelle comprising a ventilation system according to an exemplary embodiment of the invention.

### Detailed Description

The illustration in the drawing is schematically. It is noted that in different figures, similar or identical elements or features are provided with the same reference signs or with reference signs, which are different from the corresponding reference signs only within the first digit. In order to avoid unnecessary repetitions elements or features which have already been elucidated with respect to a previously described embodiment are not elucidated again at a later position of the description.

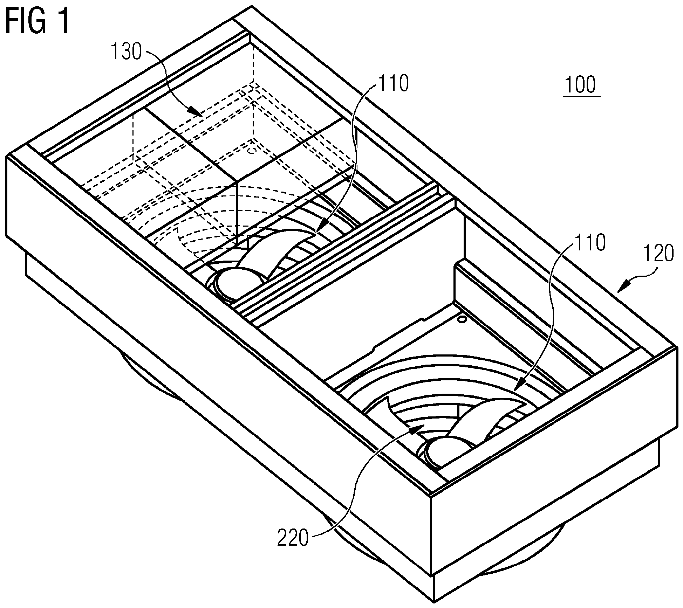

Figure 1 shows a schematically three dimensional drawing of a proposed ventilation device for a generator according to an exemplary embodiment of the invention.

In Figure 1 is shown a ventilation device 100 for a generator, preferably for a generator in a nacelle, more preferable for a generator in a nacelle of a wind turbine, the ventilation device 100 comprises: An inlet ventilation unit 110, a casing unit 120, and a filter unit 130. The casing unit 120 is adapted to receive the inlet ventilation unit 110 and the filter unit 130. The inlet ventilation unit 110 is adapted to generate an airstream from an inlet side of the casing unit to an outlet side of the casing unit, when in use, thus forming an airstream path in the ventilation device 110. The filter unit 130 is arranged in the airstream path when inserted. And the ventilation device 100 is adapted to be attached at a nacelle. In fig. 1 the ventilation device 100 may be adapted to be attached at the bottom part of the nacelle of a wind turbine, for example at an inlet side of the nacelle. The ventilation device 100 moreover comprises a further inlet ventilation unit 110. The casing unit 120 is adapted to receive the further inlet ventilation unit 110. And the further inlet ventilation unit 110 is arranged in parallel to the inlet ventilation unit 110.

By having an inlet ventilation unit 110 and casing unit 120 placed at a bottom part of a nacelle of a wind turbine, the inlet ventilation unit 110 and the filters can be placed at a non-used place and space inside the canopy or nacelle below the floor. There may also be further ventilation means, for example ventilation fans for sucking air out of the direct drive generator and further out to the ambient air through the canopy or nacelle.

The ventilation device 100 may be seen as a ventilation module which is easy to attach or detach.

Moreover, the ventilation device 100 may comprise an outer mist eliminator to ensure that moisture/humidity of the air is removed before the ambient air is blown by one or more inlet ventilation units 110 through the filter unit 130, which further may remove particles of the air like pollen, sand and dust before entering the inside of the nacelle.

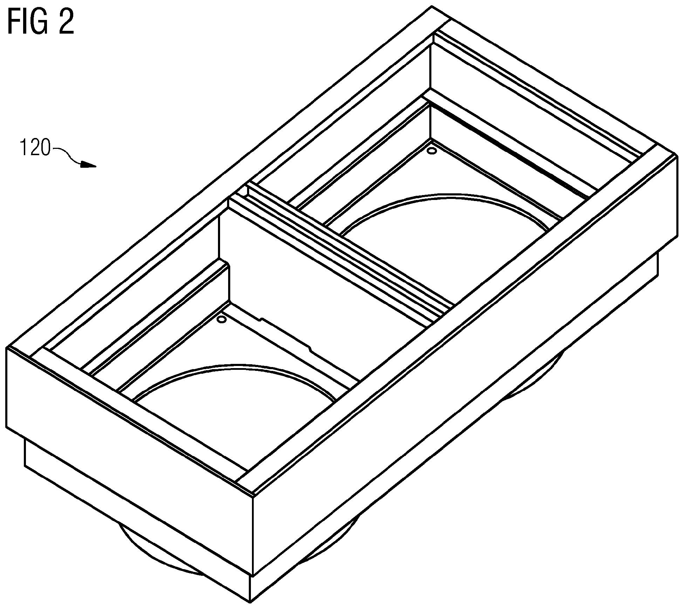

Figure 2 shows a schematically three dimensional drawing of a proposed casing unit for a ventilation device as shown in figure 1 according to an exemplary embodiment of the invention. By having an inlet ventilation unit 110 and filter unit 130 placed inside a casing unit 120 as a whole ventilation device 100 at a bottom part of a nacelle of a wind turbine, the inlet ventilation unit 110 and filter unit 130 takes up no space of the upper part space of the canopy of the nacelle, thus making access to the interior of the nacelle and service easier. By providing the ventilation device 100 as an exchangeable module it is easy to exchange the inlet ventilation unit 110 and filter unit 130 during service, if the ventilation fails.

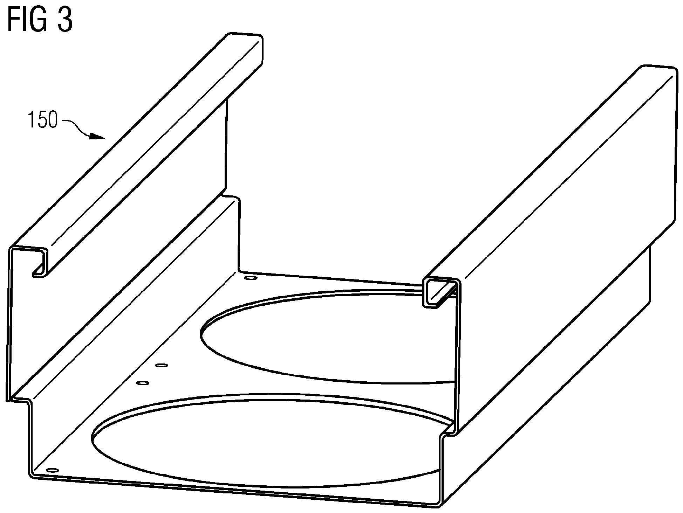

Figure 3 shows a schematically three dimensional drawing of a proposed frame structure for a ventilation system comprising a ventilation device as shown in figure 1 according to an exemplary embodiment of the invention.

The ventilation device 100 may be attached to or placed inside a frame structure which may be attached to a bedframe or machine structure of the nacelle. The inlet ventilation unit 110 and casing unit 120 may be made by using lightweight materials like aluminum, carbon fibre, glass fibre, Kevlar, nylon, Teflon, plastic and/or similar materials or more common construction materials like steel or other kind of metal materials may be used. Instead of using plates some kind of sandwich material may be used.

Figure 3 shows a frame structure 150, which may act as a self-supporting box, and which may be attached, for example by bolting, directly onto a bedframe of a nacelle. This solution may reduce weight of the combined inlet ventilation unit 110, casing unit 120 and frame structure 150 acting as a ventilation system 200 (not shown in Figure 3).

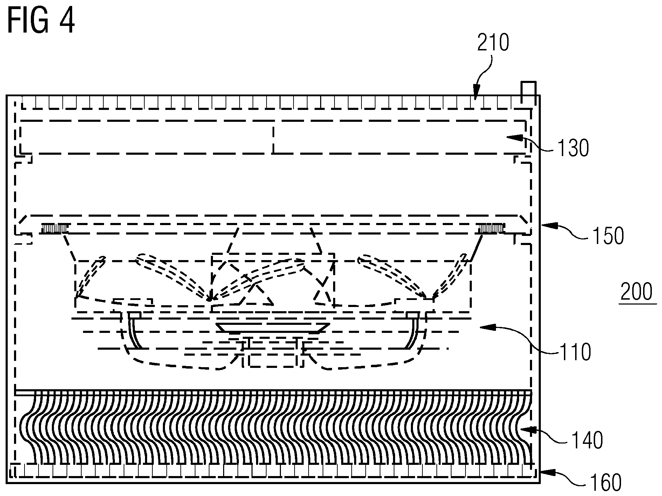

Figure 4 shows a schematically drawing of a first side view of a proposed ventilation system comprising a ventilation device comprising one ventilation unit according to an exemplary embodiment of the invention.

In Figure 4 is shown a ventilation system 200 for a generator, preferably for a nacelle of a generator, more preferable for a nacelle of a generator of a wind turbine, wherein the ventilation system 200 comprises: A ventilation device 100 according to any one of the embodiments of the first aspect of the invention, a frame structure 150 as shown in Figure 3, and a nacelle grating 210. The frame structure 150 is adapted to receive the ventilation device 100. The frame structure 150 is adapted to be attached at a bottom part of a nacelle, preferably to be attached at the bottom part of the nacelle of a wind turbine. And a top side of the frame structure 150 and/or a top side of the ventilation device 100 is adapted to be attached at a bottom side of the nacelle grating 210. The nacelle grating 210 is at least a part of the bottom part of the nacelle. By having a mist eliminator unit 140 attached to the outer part of the inlet ventilation unit 110 and/or casing unit 120, it is not needed to have further dehumidifier means placed inside the nacelle. Thereby more space is available inside the nacelle and less service is needed.

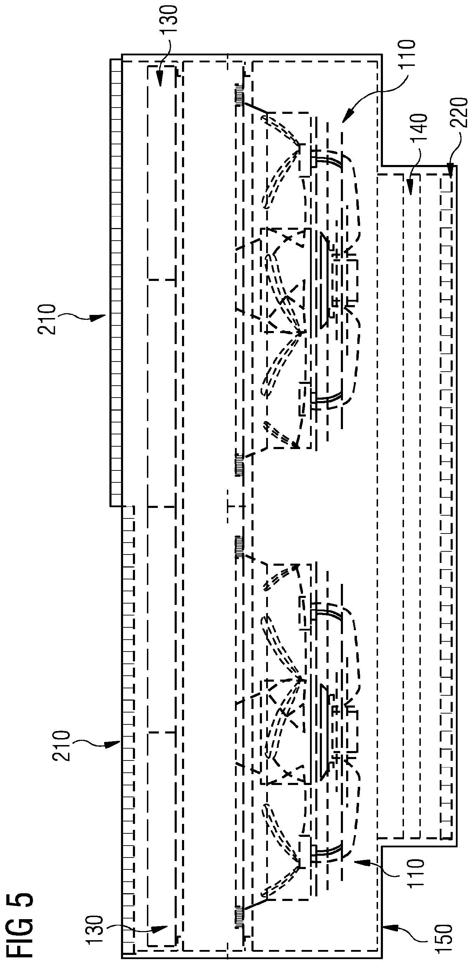

Figure 5 shows a schematically drawing of a first side view of a proposed ventilation system comprising a ventilation device comprising two inlet ventilation units as shown in figure 1 according to an exemplary embodiment of the invention. In Figure 5 the ventilation system 200 moreover comprises a further grating 220. A bottom side of the frame structure 150 and/or a bottom side of the ventilation device 100 is adapted to be attached at a top side of the further grating 220. The filter unit 130 may easily be removed during service by removing one or more nacelle gratings 210 above the filter units 130 before removing the filter units 130. By placing the filter units 130 below one or more detachable nacelle gratings 210, where the nacelle gratings 210 are a part of the floor of the nacelle, it is easy to exchange the filter units 130 during service.

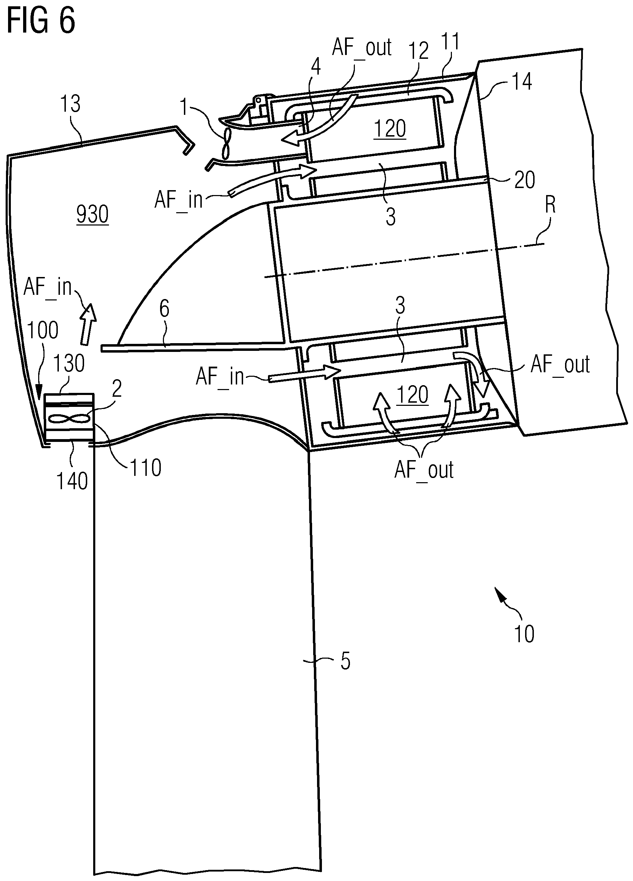

Fig. 6 shows a schematically drawing of a proposed airflow control arrangement according to an exemplary embodiment of the invention. Fig. 6 shows an exemplary embodiment of a ventilation system for cooling a nacelle of a wind turbine 10 according to the invention, in which a generator 14 is mounted on a shaft 20. A hub and rotor blades (not shown in figure 6) are mounted to the front of the shaft 20, so that a rotation of the hub results in a rotation of the outer rotor 11 about an axis of rotation R. The generator 14 comprises an outer rotor 11 and an inner stator 12

A ventilation unit 110 comprising at least one inlet fan 2 is used to draw air AF_in into the canopy interior 930. The ventilation unit 110 can be powerful enough to generate an overpressure in the canopy interior 930. In the exit duct 4, the exit airflow AF_out is sucked through the outflow fan 1 and is then expelled from the wind turbine 10.

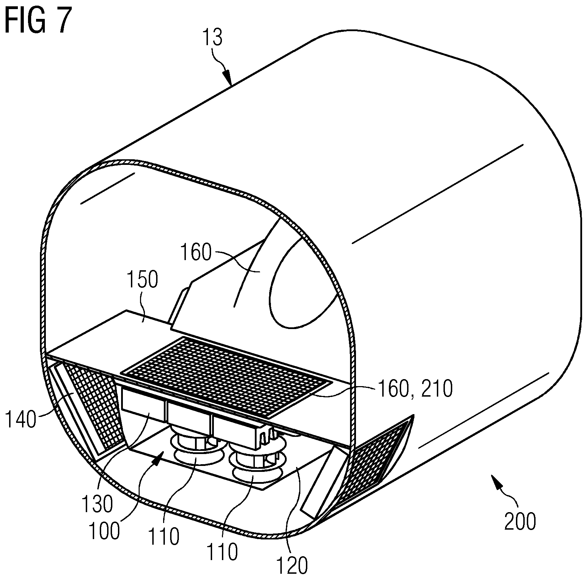

Fig. 7 shows a schematically drawing of a nacelle comprising a ventilation system according to an exemplary embodiment of the invention. The ventilation system 200 has a ventilation device 100 arranged in a lower portion of the canopy 13. The ventilation system 200 for the nacelle of a wind turbine comprises a ventilation device 100 attached to a frame structure 150 which may be attached to the machine structure 160 of the nacelle. The ventilation system 200 would in a more preferred embodiment comprise two mist eliminator units 140 arranged on the outside of the canopy 13. The inlet ventilation unit 110 comprises a casing unit where two inlet fans and filter units 130 are arranged. The inlet ventilation unit 110 could be fitted with a control mechanism enabling an individual control of each inlet fan. This control mechanism could be realised in a number of ways, for example with a frequency converter or by having a controller which enables individual control of each inlet fan.

The filter units 130 are placed below one or more detachable nacelle gratings 210, where the nacelle gratings 210 are a part of the floor of the nacelle, which makes exchange the filter units 130 during service quite easy.

The eliminator units 140 could also be attached to the outer part of the inlet ventilation unit 110 and/or casing unit 120.

The ambient air that is needed for cooling the interior of the nacelle has to pass through at least one impurity-removing mechanism disposed in a flow path of air from the intake.

An impurity-removing mechanism may comprise separation means and filtration phase, wherein the separation means removes mist and/or airborne particles from the incoming air.

The filtration phase carries out the filtration of the solid particles contained in the air after having passed through the separation phase, and is composed of filters which are set up in a V-shape for an improved performance of the filtration section. The filters can be made for example of a synthetic, cellulose or fiberglass material, possible impregnated with an agent for a greater efficiency of the filtration, depending on the needs of the place where the wind turbine is installed.

It should be noted that the term "comprising" does not exclude other elements or steps and the use of articles "a" or "an" does not exclude a plurality. Also elements described in association with different embodiments may be combined. It should also be noted that reference signs in the claims should not be construed as limiting the scope of the claims.

It should be noted that the term "attaching" may comprise bolting, riveting, welding or any other bonding of two materials, depending of the use of the materials and/or parts attached to each other. Where possible and useful, welding, bolting or riveting may be substituted by each other.

It is noted that it may also be possible in further refinements of the invention to combine features from different illustrative embodiments described herein. It should also be noted that reference signs in the claims should not be construed as limiting the scope of the claims.

In order to recapitulate the above described embodiments of the present invention one can state:
The proposed invention may lead to the use of a ventilation device and/or ventilation system, where the ventilation device and/or ventilation system is attached at a bottom part of a nacelle of a generator. Therefore, the nacelle may be reduced in size or more space inside the nacelle is available. Moreover, as the ventilation device and/or ventilation system is exchangeable as a whole, service at the wind turbine may be simplified and therefore service costs may be reduced.

## Claims

1. A ventilation device (100) for a wind turbine, preferably for a nacelle of a wind turbine, more preferable for a cooling system for a nacelle of a wind turbine, the ventilation device (100) comprising:
a casing unit (120) having an inlet side and an outlet side,
an inlet ventilation unit (110) adapted to generate, when in use, an airstream from the inlet side of the casing unit to the outlet side of the casing unit, thus forming an airstream path in the ventilation device (110), and
a filter unit (130) arranged in the airstream path between the inlet side of the casing unit (120) to the outlet side of the casing unit (120),
an outer mist eliminator unit (140) attached to the casing unit (120), wherein
the inlet ventilation unit (110) and the filter unit (130) are placed inside the casing unit (120), the inlet ventilation unit (110) being placed upstream the filter unit (130) and downstream the outer mist eliminator unit (140) with respect to the airstream path between the inlet side of the casing unit to the outlet side of the casing unit, and
the ventilation device (100) is adapted to be repeatedly attached and detached at a nacelle.

2. The ventilation device (100) as set forth in preceding claim 1, the ventilation device (100) moreover comprising
separation means, wherein
the separation means is adapted to remove mist and/or airborne particles from an incoming air.

3. The ventilation device (100) as set forth in preceding claim 2, wherein
the outer mist eliminator unit (140) is arranged at the inlet side of the casing unit (120) inside the casing unit (120), at the inlet side of the casing unit (120) outside the casing unit (120) or outside the casing unit (120) .

4. The ventilation device (100) as set forth in preceding claim 3, wherein
if the outer mist eliminator unit (140) is arranged outside the casing unit (120), the casing unit (120) moreover comprises
an air channel arranged between the outer mist eliminator unit (140) and the casing unit (120), wherein
the air channel is adapted for guiding air from the outer mist eliminator (140) to the inlet side of the casing unit (120), in such a manner, that the inlet side of the casing unit (120) only receives air from the air channel.

5. The ventilation device (100) as set forth in any of the preceding claims, wherein
the inlet ventilation unit comprises
at least an inlet fan, and
a control unit, wherein
the inlet fan is adapted for sucking and/or blowing air into the casing unit (120), and
the control unit is adapted for enabling an individual control of each inlet fan.

6. The ventilation device (100) as set forth in any of the preceding claims, the ventilation device (100) moreover comprising
a ventilation grating (160), wherein
the ventilation grating (160) is arranged at the inlet side or at the outlet side of the casing unit (120).

7. The ventilation device (100) as set forth in any of the preceding claims, wherein
the ventilation device (100) is made out of at least one material of a group of light-weight materials, the group of light-weight materials comprising: aluminum, carbon fibre, glass fibre, Kevlar, nylon, Teflon and plastic.

8. The ventilation device (100) as set forth in any of the preceding claims, the ventilation device (100) moreover comprising
a further inlet ventilation unit (110), wherein the casing unit (120) is adapted to receive the further inlet ventilation unit (110), and
the further inlet ventilation unit (110) is arranged in parallel to the inlet ventilation unit (110).

9. The ventilation device (100) as set forth in preceding claim 8, the ventilation device (100) moreover comprising
a further filter unit (130), wherein
the further filter unit (130) is arranged above the further inlet ventilation unit (110) when inserted in the casing unit (120).

10. The ventilation device (100) as set forth in any preceding claims, wherein
a nacelle grating (120) is attachable at the ventilation device (100), and
the nacelle grating (210) is at least a part of the nacelle.

11. A ventilation system (200) for a wind turbine, preferably for a nacelle of a wind turbine, more preferable for a cooling system for a nacelle of a wind turbine, the ventilation system (200) comprising a ventilation device (100) according to any one of claims 1 to 10, and
a frame structure (150), wherein
the frame structure (150) is adapted to receive the ventilation device (100),
the frame structure (150) is adapted to be repeatedly attached and detached at a nacelle.

12. The ventilation system (200) as set forth in preceding claim 11, moreover comprising
a nacelle grating (210), wherein
the nacelle grating (210) is at least a part of the nacelle, and
the nacelle grating (120) is attachable at the frame structure (150).

13. The ventilation system (200) as set forth in any of the preceding claims 11 or 12, the ventilation system (200) moreover comprising
a further grating (220), wherein
a bottom side of the frame structure (150) and/or a bottom side of the ventilation device (100) is adapted to be attached at a top side of the further grating (220) .

14. The ventilation system (200) as set forth in any of the preceding claims 11 to 13, wherein
the ventilation device (100) is adapted to act as one exchangeable device.

15. The ventilation system (200) as set forth in any of the preceding claims 11 to 14, wherein
the frame structure (150), the ventilation device (200) and/or the further grating (220) are together adapted to act as one exchangeable device.

## Patentansprüche

1. Lüftungsvorrichtung (100) für eine Windenergieanlage, vorzugsweise für eine Gondel einer Windenergieanlage, besonders bevorzugt für ein Kühlsystem für eine Gondel einer Windenergieanlage, wobei die Lüftungsvorrichtung (100) Folgendes umfasst:
eine Gehäuseeinheit (120) mit einer Eintritts- und einer Austrittsseite,
eine Ansaugventilationseinheit (110), die so ausgelegt ist, dass sie im Gebrauch einen von der Eintritts- zur Austrittsseite der Gehäuseeinheit verlaufenden Luftstrom erzeugt und so einen Luftstromweg in der Lüftungsvorrichtung (110) bildet, und
eine Filtereinheit (130), die in dem Luftstromweg zwischen der Eintrittsseite und der Austrittsseite der Gehäuseeinheit (120) angeordnet ist,
eine äußere Tropfenabscheidereinheit (140), die an der Gehäuseeinheit (120) angebracht ist, wobei
die Ansaugventilationseinheit (110) und die Filtereinheit (130) in der Gehäuseeinheit (120) angeordnet sind, die Ansaugventilationseinheit (110) in Bezug auf den Luftstromweg zwischen der Eintritts- und der Austrittsseite der Gehäuseeinheit stromaufwärts von der Filtereinheit (130) und stromabwärts von der äußeren Tropfenabscheidereinheit (140) angeordnet ist und
die Lüftungsvorrichtung (100) so ausgelegt ist, dass sie sich wiederholt an einer Gondel anbringen und davon abnehmen lässt.

2. Lüftungsvorrichtung (100) nach dem vorhergehenden Anspruch 1, die darüber hinaus Folgendes umfasst:
ein Trennmittel, wobei
das Trennmittel so ausgelegt ist, dass es Tropfen und/oder Schwebstoffpartikel aus hereinströmender Luft entfernt.

3. Lüftungsvorrichtung (100) nach dem vorhergehenden Anspruch 2, wobei
die äußere Tropfenabscheidereinheit (140) an der Eintrittsseite der Gehäuseeinheit (120) in der Gehäuseeinheit (120), an der Eintrittsseite der Gehäuseeinheit (120) außerhalb der Gehäuseeinheit (120) oder außerhalb der Gehäuseeinheit (120) angeordnet ist.

4. Lüftungsvorrichtung (100) nach dem vorhergehenden Anspruch 3, wobei
die Gehäuseeinheit (120), wenn die äußere Tropfenabscheidereinheit (140) außerhalb der Gehäuseeinheit (120) angeordnet ist, darüber hinaus Folgendes umfasst:
einen Luftkanal, der zwischen der äußeren Tropfenabscheidereinheit (140) und der Gehäuseeinheit (120) angeordnet ist, wobei
der Luftkanal zum derartigen Leiten von Luft aus dem äußeren Tropfenabscheider (140) zur Eintrittsseite der Gehäuseeinheit (120) ausgelegt ist, dass die Eintrittsseite der Gehäuseeinheit (120) nur Luft aus dem Luftkanal erhält.

5. Lüftungsvorrichtung (100) nach einem der vorhergehenden Ansprüche, wobei
die Ansaugventilationseinheit Folgendes umfasst:
zumindest ein Anströmgebläse und
eine Steuereinheit, wobei
das Anströmgebläse zum Ansaugen und/oder Blasen von Luft in die Gehäuseeinheit (120) ausgelegt ist und die Steuereinheit so ausgelegt ist, dass sie ein individuelles Steuern jedes Anströmgebläses ermöglicht.

6. Lüftungsvorrichtung (100) nach einem der vorhergehenden Ansprüche, die darüber hinaus Folgendes umfasst:
ein Lüftungsgitter (160), wobei das Lüftungsgitter (160) an der Eintritts- oder der Austrittsseite der Gehäuseeinheit (120) angeordnet ist.

7. Lüftungsvorrichtung (100) nach einem der vorhergehenden Ansprüche, wobei
die Lüftungsvorrichtung (100) aus mindestens einem Material aus einer Gruppe leichter Materialien hergestellt ist, die Aluminium, Kohlenstofffaser, Glasfaser, Kevlar, Nylon, Teflon und Kunststoff umfasst.

8. Lüftungsvorrichtung (100) nach einem der vorhergehenden Ansprüche, die darüber hinaus Folgendes umfasst:
eine weitere Ansaugventilationseinheit (110), wobei die Gehäuseeinheit (120) so ausgelegt ist, dass sie die weitere Ansaugventilationseinheit (110) aufnimmt, und
die weitere Ansaugventilationseinheit (110) parallel zu der Ansaugventilationseinheit (110) angeordnet ist.

9. Lüftungsvorrichtung (100) nach dem vorhergehenden Anspruch 8, die darüber hinaus Folgendes umfasst:
eine weitere Filtereinheit (130), wobei die weitere Filtereinheit (130) über der weiteren Ansaugventilationseinheit (110) angeordnet ist, wenn sie in die Gehäuseeinheit (120) eingesetzt ist.

10. Lüftungsvorrichtung (100) nach einem der vorhergehenden Ansprüche, wobei
sich ein Gondelgitter (120) an der Lüftungsvorrichtung (100) anbringen lässt und
das Gondelgitter (210) zumindest ein Bestandteil der Gondel ist.

11. Lüftungssystem (200) für eine Windenergieanlage, vorzugsweise für eine Gondel einer Windenergieanlage, besonders bevorzugt für ein Kühlsystem für eine Gondel einer Windenergieanlage, wobei das Lüftungssystem (200) Folgendes umfasst:
eine Lüftungsvorrichtung (100) nach einem der Ansprüche 1 bis 10 und
eine Rahmenkonstruktion (150), wobei
die Rahmenkonstruktion (150) so ausgelegt ist, dass sie die Lüftungsvorrichtung (100) aufnimmt,
die Rahmenkonstruktion (150) so ausgelegt ist, dass sie sich wiederholt an einer Gondel anbringen und davon abnehmen lässt.

12. Lüftungssystem (200) nach dem vorhergehenden Anspruch 11, das darüber hinaus Folgendes umfasst:
ein Gondelgitter (210), wobei
das Gondelgitter (210) zumindest ein Bestandteil der Gondel ist und
sich das Gondelgitter (120) an der Rahmenkonstruktion (150) anbringen lässt.

13. Lüftungssystem (200) nach einem der vorhergehenden Ansprüche 11 und 12, das darüber hinaus Folgendes umfasst:
ein weiteres Gitter (220), wobei eine untere Seite der Rahmenkonstruktion (150) und/oder der Lüftungsvorrichtung (100) so ausgelegt ist, dass sie sich an einer oberen Seite des weiteren Gitters (220) anbringen lässt.

14. Lüftungssystem (200) nach einem der vorhergehenden Ansprüche 11 bis 13, wobei
die Lüftungsvorrichtung (100) so ausgelegt ist, dass sie als eine austauschbare Vorrichtung dient.

15. Lüftungssystem (200) nach einem der vorhergehenden Ansprüche 11 bis 14, wobei
die Rahmenkonstruktion (150), die Lüftungsvorrichtung (200) und/oder das weitere Gitter (220) zusammen so ausgelegt sind, dass sie als eine austauschbare Vorrichtung dienen.

## Revendications

1. Dispositif de ventilation (100) pour éolienne, de préférence pour une nacelle d'une éolienne, de manière davantage préférée pour un système de refroidissement pour une nacelle d'une éolienne, le dispositif de ventilation (100) comprenant :
une unité de boîtier (120) présentant un côté entrée et un côté sortie,
une unité de ventilation d'entrée (110) conçue afin de générer, en cours d'utilisation, un courant d'air provenant du côté entrée de l'unité de boîtier et se dirigeant vers le côté sortie de l'unité de boîtier, en formant ainsi un chemin de courant d'air dans le dispositif de ventilation (110), et
une unité de filtre (130) agencée dans le chemin de courant d'air entre le côté entrée de l'unité de boîtier (120) et le côté sortie de l'unité de boîtier (120),
une unité d'élimination de brouillard extérieure (140) fixée à l'unité de boîtier (120), dans lequel
l'unité de ventilation d'entrée (110) et l'unité de filtre (130) sont placées à l'intérieur de l'unité de boîtier (120), l'unité de ventilation d'entrée (110) étant placée en amont de l'unité de filtre (130) et en aval de l'unité d'élimination de brouillard extérieur (140) relativement au chemin de courant d'air entre le côté entrée de l'unité de boîtier et le côté sortie de l'unité de boîtier, et
le dispositif de ventilation (100) est conçu afin d'être fixé et détaché de manière répétée à une nacelle.

2. Dispositif de ventilation (100) selon la revendication 1 précédente, le dispositif de ventilation (100) comprenant en outre
des moyens de séparation, dans lequel
les moyens de séparation sont conçus afin d'éliminer le brouillard et/ou les particules aériennes d'un air en entrée.

3. Dispositif de ventilation (100) selon la revendication 2 précédente, dans lequel
l'unité d'élimination de brouillard extérieure (140) est agencée du côté entrée de l'unité de boîtier (120) à l'intérieur de l'unité de boîtier (120), sur le côté entrée de l'unité de boîtier (120) à l'extérieur de l'unité de boîtier (120) ou à l'extérieur de l'unité de boîtier (120).

4. Dispositif de ventilation (100) selon la revendication 3 précédente, dans lequel
si l'unité d'élimination de brouillard extérieure (140) est agencée hors de l'unité de boîtier (120), l'unité de boîtier (120) comprend en outre
un canal d'air agencé entre l'unité d'élimination de brouillard extérieure (140) et l'unité de boîtier (120), dans lequel
le canal d'air est conçu afin de guider l'air depuis le système d'élimination de brouillard extérieure (140) vers le côté entrée de l'unité de boîtier (120), de telle sorte que le côté entrée de l'unité de boîtier (120) reçoit uniquement de l'air du canal d'air.

5. Dispositif de ventilation (100) selon l'une quelconque des revendications précédentes, dans lequel
l'unité de ventilation d'entrée comprend
au moins un ventilateur d'entrée, et
une unité de commande, dans lequel
le ventilateur d'entrée est conçu afin d'aspirer et/ou de souffler de l'air dans l'unité de boîtier (120), et
l'unité de commande est conçue afin de permettre une commande individuelle de chaque ventilateur d'entrée.

6. Dispositif de ventilation (100) selon l'une quelconque des revendications précédentes, le dispositif de ventilation (100) comprenant en outre
une grille de ventilation (160), dans lequel
la grille de ventilation (160) est agencée sur le côté entrée ou sur le côté sortie de l'unité de boîtier (120).

7. Dispositif de ventilation (100) selon l'une quelconque des revendications précédentes, dans lequel
le dispositif de ventilation (100) est constitué d'au moins un matériau d'un groupe de matériaux légers, le groupe de matériaux légers comprenant : de l'aluminium, de la fibre de carbone, de la fibre de verre, du Kevlar, du nylon, du Téflon et du plastique.

8. Dispositif de ventilation (100) selon l'une quelconque des revendications précédentes, le dispositif de ventilation (100) comprenant en outre
une autre unité de ventilation d'entrée (110), dans lequel
l'unité de boîtier (120) est conçue afin de recevoir l'autre unité de ventilation d'entrée (110), et
l'autre unité de ventilation d'entrée (110) est agencée de manière parallèle à l'unité de ventilation d'entée (110).

9. Dispositif de ventilation (100) selon la revendication 8 précédente, le dispositif de ventilation (100) comprenant en outre
une autre unité de filtre (130), dans lequel
l'autre unité de filtre (130) est agencée au-dessus de l'autre unité de ventilation d'entrée (110) lorsqu'elle est insérée dans l'unité de boîtier (120).

10. Dispositif de ventilation (100) selon l'une quelconque des revendications précédentes, dans lequel
une grille de nacelle (120) peut être fixée au dispositif de ventilation (100), et
la grille de nacelle (210) est au moins une partie de la nacelle.

11. Système de ventilation (200) pour une éolienne, de préférence pour une nacelle d'une éolienne, de manière davantage préférée pour un système de refroidissement pour une nacelle d'une éolienne, le système de ventilation (200) comprenant
un dispositif de ventilation (100) selon l'une quelconque des revendications 1 à 10, et
une structure de cadre (150), dans lequel
la structure de cadre (150) est conçue afin de recevoir le dispositif de ventilation (100),
la structure de cadre (150) est conçue afin d'être fixée et détachée de manière répétée à une nacelle.

12. Système de ventilation (200) selon la revendication 11 précédente, comprenant en outre
une grille de nacelle (210), dans lequel
la grille de nacelle (210) est au moins une partie de la nacelle, et
la grille de nacelle (120) peut être fixée à la structure de cadre (150).

13. Système de ventilation (200) selon l'une quelconque des revendications 11 ou 12 précédentes, le système de ventilation (200) comprenant en outre
une autre grille (220), dans lequel
un côté inférieur de la structure de cadre (150) et/ou un côté inférieur du dispositif de ventilation (100) est conçu afin d'être fixé à un côté supérieur de l'autre grille (220).

14. Système de ventilation (200) selon l'une quelconque des revendications 11 à 13 précédentes, dans lequel
le dispositif de ventilation (100) est conçu afin d'agir comme un dispositif échangeable.

15. Système de ventilation (200) selon l'une quelconque des revendications 11 à 14 précédentes, dans lequel
la structure de cadre (150), le dispositif de ventilation (200) et/ou l'autre grille (220) sont conçus ensemble afin d'agir comme un dispositif échangeable.
